# EUROPÄISCHE PATENTSCHRIFT

(11) **EP 3 793 826 B1**
(45) Veröffentlichungstag und Bekanntmachung des Hinweises auf die Patenterteilung: **25.05.2022**
(21) Anmeldenummer: 19720919.0
(22) Anmeldetag: 06.05.2019
(51) Int. Cl.: B32B 15/082, B32B 15/085, B32B 15/088, B32B 15/09, B32B 15/20, B29C 59/08

(54) **KALTVERFORMBARES VERPACKUNGSLAMINAT**
COLD-WORKABLE PACKAGING LAMINATE
STRATIFIÉ D'EMBALLAGE FORMABLE À FROID

(30) Priorität: 16.05.2018 EP 18172707
(43) Veröffentlichungstag der Anmeldung: 24.03.2021
(73) Patentinhaber: Constantia Teich GmbH, 3205 Weinburg (AT)
(72) Erfinder: KORNFELD, Martin, 3400 Klosterneuburg (AT); KITZBERGER, Robert, 3133 Traismauer (AT); RESCH, Helmut, 3203 Rabenstein (AT); TEUBENBACHER, Jasmin, 3205 Weinburg (AT); SCHEDL, Adolf, 3180 Lilienfeld (AT); ZUSER, Wilhelm, 2700 Wr. Neustadt (AT)
(74) Vertreter: Patentanwälte Pinter & Weiss OG
(86) Internationale Anmeldenummer: PCT/EP2019/061569
(87) Internationale Veröffentlichungsnummer: WO 2019/219435

(56) Entgegenhaltungen:
- EP-A1- 0 312 307
- US-A1- 2005 019 580

## Beschreibung

Die gegenständliche Erfindung betrifft ein kaltverformbares Verpackungslaminat mit einer Trägerschicht aus Aluminium, die an einer erste Seite über eine erste Kleberschicht mit einer gereckten Kunststoffschicht verbunden ist und an der gegenüberliegenden zweiten Seite über eine zweite Kleberschicht mit einer zweiten Kunststoffschicht verbunden ist, sowie ein Verfahren zur Herstellung eines solchen kaltverformbaren Verpackungslaminats.

In der Verpackungsindustrie werden häufig als Ausgangsmaterial für die Herstellung von Verpackungen folienartige, mehrschichtige Laminate verwendet. Dabei kommen je nach Anwendung verschiedenste Laminataufbauten in Frage. In vielen Verpackungslaminaten wird eine Aluminiumfolie als Trägerschicht verwendet, da Aluminium einen hervorragenden Produktschutz sicherstellt, einfach verarbeitet werden kann und in Verpackungslaminaten eine Barriere gegen äußere Einflüsse bildet. Die Trägerschicht aus Aluminium wird in der Regel mit anderen Schichten zum Verpackungslaminat kombiniert, wobei die anderen Schichten mit der Aluminiumschicht kaschiert werden können oder die anderen Schichten im Falle von Kunststoffen auf die Aluminiumschicht extrudiert werden können. Beim Kaschieren erfolgt die Verbindung mittels eines Klebers. Der Kleber kann dabei in einem Lösungsmittel gelöster, flüssiger Form aufgetragen werden, oder kann extrudiert werden. Im letzteren Fall spricht man auch von Extrusionskaschierung.

Für die Verwendung als Verpackungslaminat ist natürlich eine ausreichende Haftung zwischen der Trägerschicht aus Aluminium und einer damit verbundenen Kunststoffschicht erforderlich, um zu verhindern, dass sich das Verpackungslaminat bei Verwendung delaminiert oder manuell getrennt werden kann. In Verpackungslaminaten kommen dabei am häufigsten Polyolefine, wie z.B. Polypropylen (PP) oder Polyethylen (PE) in den verschiedenen Typen, zur Anwendung. Daher werden in Verpackungslaminaten zum einen spezielle Kleber und Haftvermittler verwendet und zum anderen kommen übliche Oberflächenbehandlungen, wie z.B. eine Flammbehandlung, Coronabehandlung oder Chromatierung der Oberfläche, zur Anwendung, insbesondere bei erhöhter Anforderung an die Delaminationsbeständigkeit. Damit konnten mit verfügbaren oder üblichen Klebern und Haftvermittlern Verpackungslaminate hergestellt werden, die den Anforderungen genügten.

Solche Verpackungslaminate werden häufig in einem Kaltverformungsprozess verwendet, was prozessbedingt anwendungsspezifische Anforderungen an das Verpackungslaminat stellt. Eine typische Anwendung sind Blisterverpackungen zur Aufnahme von Medikamenten. Dabei wird durch Kaltumformung eine Blisterverpackungsschale mit Kavitäten zur Aufnahme des Füllgutes oder Produktes ausgebildet. Solche Blisterverpackungsschalen können für größere Kavitäten oder größere Blisterverpackungsschalen durch Tiefziehen (Zugdruckumformen) oder, üblicherweise für kleine Kavitäten, durch Streckziehen (Zugumformen) hergestellt werden. Beim Streckziehen wird ein Verpackungslaminat zwischen Klemmvorrichtungen mehrseitig eingespannt und durch einen verfahrbaren Stempel umgeformt. Durch die Einspannung steht wenig Material zur Umformung zur Verfügung, was in der Regel auch zu einer Dickenveränderung des Materials im Bereich der Kavitäten führt. Das ist auch der größte Unterschied zum Tiefziehen, bei dem Material während der Umformung nachrutschen kann und es in der Regel zu keinen Dickenänderungen durch Ausdünnung des Materials kommt. Solche kaltverformbare Verpackungslaminate haben daher eine Außenseite (die am durch Umformen gebildeten Behältnis außen liegt) und eine Innenseite (die am durch Umformen gebildeten Behältnis innen, also dem Füllgut zugewandt, liegt) und benötigen ausreichende Formstabilität.

Ein bekannter Aufbau eines kaltverformbaren Verpackungslaminats für Medikamentenblister besteht von außen nach innen aus gerecktem Polyamid (oPA) / Kleber (Polyurethan) / Haftvermittler (Epoxidharz) / Aluminium / Kleber (Polyurethan) / Poylvinylchlorid (PVC). Aufgrund von strengeren gesetzlichen Rahmenbedingungen für Verpackungslaminate, insbesondere für die Verpackung von Lebensmitteln oder Medikamenten, wird die Auswahl der möglichen Kleber und Haftvermittler und/oder die Möglichkeiten der Oberflächenbehandlung aber erheblich eingeschränkt. Beispielsweise enthalten bisher verwendete Kleber und Haftvermittler, insbesondere auf Epoxidharzbasis, oftmals Bisphenol-A. Bisphenol-A ist aber eine Gruppe-3-Chemikalie der International Agency for Research on Cancer (IARC), d.h. nicht klassifizierbar hinsichtlich seiner Karzinogenität für den Menschen, und ist daher in Verpackungslaminaten unerwünscht. Ebenso gibt es strenge Vorschriften was den zulässigen Chromgehalt in Verpackungen angeht und was den Umgang mit Chromverbindungen angeht. Die Vorschriften werden noch weiter verschärft. Das macht die Verwendung bisheriger Kleber, Haftvermittler und Oberflächenbehandlungen schwierig oder sogar unmöglich.

Solche Blisterverpackungsschalen unterliegen aber auch besonderen Anforderungen. Durch die Ausformung der Kavitäten entstehen an der Außenseite kleine Radien am Übergang von den ebenen Zonen der Blisterverpackungsschale zu den Kavitäten. In Blisterverpackungen eingesetzte gereckte Kunststofffolien, wie ein oPA oder ein oPP, neigen nach einer Kaltverformung aber zum Rückschrumpfen. Durch das Rückschrumpfverhalten kann es bei nicht ausreichender Verbundhaftung zwischen der äußeren Schicht des Verpackungslaminats (z.B. oPA) und der Trägerschicht aus Aluminium zu einer Delamination zwischen der gereckten Kunststoffschicht und der Aluminiumschicht kommen. Eine solche Delamination kann kleinflächig entlang der Radien der Kavitäten der Blisterverpackungsschale auftreten, oder auch großflächig über einen großen Oberflächenbereich. An der Innenseite der Blisterverpackungsschale kann dieses Problem nicht auftreten, weil die Trägerschicht aus Aluminium die innen liegenden Kunststoffschicht (z.B. PVC) stützt. Aus diesem Grund ist insbesondere zwischen der äußeren gereckten Kunststoffschicht und der Aluminiumschicht eine ausreichende Verbundhaftung erforderlich, um eine Delamination zu verhindern. Um ausreichende Verbundhaftung aufzubauen sind bisher zwischen der gereckten Kunststoffschicht und der Aluminiumschicht ein Haftvermittler und ein hochwertiger Kleber vorzusehen. Der Haftvermittler ist erforderlich, um zum Aluminium eine ausreichende Haftung herstellen zu können. Haftvermittler sind häufig auf Epoxidharzbasis hergestellt, was aber aus den oben genannten Gründen unerwünscht ist, weshalb es den Wunsch gibt, auf den Haftvermittler, beispielsweise auf Epoxidharzbasis, verzichten zu können. Kleber für diese Anwendung enthalten oftmals ebenso Bisphenol-A, weshalb es auch vorteilhaft wäre auf andere, insbesondere Bisphenol-A freie, Kleber zurückgreifen zu können. Das war bisher nicht möglich, weil die erzielbare Verbundhaftung nicht ausreichend war.

EP 0 312 307 A1 offenbart ein Verpackungsmaterial für Getränkedosen und Behälter für Fertiggerichte, wobei das Metallblech innenseitig mit einem coextrudierten polyolefinhaltigen Film beschichtet ist. An der Außenseite ist eine gegebenfalls biaxial orientierte Folie aus einem thermoplastischen Polymer, beispielsweise aus Polyester, Polyamid oder einem Polyolefin, angeordnet. Die Folien werden vorzugsweise ohne Kleberschicht innen- bzw. außenseitig auf das vorgewärmte Metallblech aufgebracht. Danach wird der Metallkern nochmals stark erhitzt und gleich wieder abgeschreckt. Das sorgt für eine gute Haftung der Folien auf dem Metallblech ohne zusätzlichen Klebstoff. Es wird kein Verpackungsmaterial offenbart, das durch Kaltformung zur Blisterverpackung verformbar ist.

US 2005/0019580 A1 offenbart ein Verfahren für Oberflächenmodifikation mittels Organometallverbindungen mit Siedepunkten zwischen 10-100°C. Unter anderem sind Titanisierung, Silikatisierung und Aluminisierung durch verschiedene Precurser offenbart. Es wird keine Verbesserung der Tiefziehbarkeit eines kaltverformbaren Verpackungslaminats offenbart.

Die WO 2017/174510 A1 beschreibt ein sterilisierbares Verpackungslaminat, in dem die Verbundhaftung zwischen einer Trägerschicht aus Aluminium und einer nicht gereckten Polyolefinschicht erhöht wird, indem die Trägerschicht aus Aluminium vor dem Verbinden mit der Polyolefinschicht silikatisiert oder titanisiert wird. Durch die Silikatisierung oder Titanisierung kann ausreichend Verbundhaftung zwischen der Trägerschicht und der Polyolefinschicht, beispielsweise ungerecktes Polypropylen, aufgebaut werden. Ein solches Verpackungslaminat kann auch zu einem Behälter tiefgezogen werden. Ganz wesentlich kann damit auch eine ausreichende Verbundhaftung nach einem Sterilisationsprozess erzielt werden. Dabei soll vor allem die Verbundhaftung zwischen Polyolefinschicht, die an der Innenseite einer Verpackung aus einem solchen Verpackungslaminat angeordnet ist, und der außen liegenden Trägerschicht erhöht werden. Damit kann in einem tiefgezogenen Behälter mit einem solchen Verpackungslaminat das Delaminationsproblem wie in einer Blisterverpackung nicht auftreten. Die erhöhte Verbundhaftung an der Innenseite des Verpackungslaminats wird in diesem Fall benötigt, weil die Innenseite der Verpackung mit dem Füllgut in Berührung kommt und die Innenseite, insbesondere auch der Kleber, einerseits dadurch durch das Füllgut der Verpackung und andererseits auch durch die Sterilisationsbedingungen belastet wird. Sterilisiert wird in einem Autoklaven bei typischen Temperaturen von 121°C und höher und für Zeitspannen im Bereich von 30min (30 - 45 Minuten). Durch den Sterilisationsprozess, aber auch durch das Füllgut in einer Verpackung selbst, wird der Kleber belastet, was die Verbundhaftung verringert und die Delaminationsbeständigkeit reduziert.

Es ist daher eine Aufgabe der gegenständlichen Erfindung ein kaltverformbares Verpackungslaminat mit einer Trägerschicht aus Aluminium und einer damit verbundenen gereckten Kunststoffschicht, und ein zugehöriges Herstellverfahren, anzugeben, das eine ausrei chende Haftung zwischen diesen Schichten aufweist, sodass insbesondere nach einer Kaltumformung keine Delamination dieser Schichten auftritt.

Diese Aufgabe wird erfindungsgemäß dadurch gelöst, dass die der ersten Kleberschicht zugewandte Oberfläche der Trägerschicht eine durch Silikatisierung oder Titanisierung hergestellte modifizierte Oberflächenschicht aufweist, auf die die erste Kleberschicht aufgetragen ist. Überraschender Weise wurde festgestellt, dass das Titanisieren oder Silikatisieren auch in einem solchen Verbund vorteilhaft angewendet werden kann, um die Delamination aufgrund des Rückschrumpfens und Entspannen der gereckten Kunststofffolie zu verhindern. Im Fall der Rückschrumpfung wird nicht der Kleber durch das Füllgut oder durch eine Sterilisation belastet, sondern es kommt zu einer Scher-Zugbeanspruchung zwischen gereckter Kunststofffolie und Kleber. Auch in diesem Fall konnte festgestellt werden, dass eine Titanisierung oder Silikatisierung Abhilfe gegen eine mögliche Delamination bietet. Dabei konnte sogar festgestellt werden, dass auf einen bisher als notwendig erachteten Haftvermittler vorteilhafterweise sogar zur Gänze verzichtet werden kann, womit auch Material und Kosten eingespart werden können.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 ein erfindungsgemäßes kaschiertes Verpackungslaminat,
Fig.2 eine mit dem Verpackungslaminat hergestellte Blisterverpackung,
Fig.3 einen Schnitt durch eine Blisterverpackungsschale und
Fig.4 einen beispielhaften Herstellprozess eines solchen Verpackungslaminats.

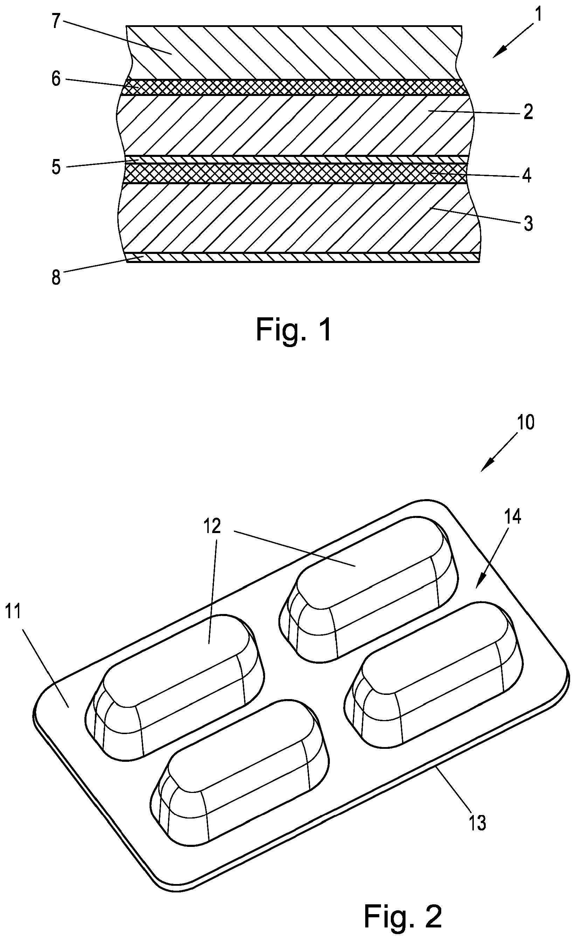

In Fig.1 ist ein erfindungsgemäßes kaschiertes kaltverformbares Verpackungslaminat 1 mit einer Trägerschicht 2 aus Aluminium (Schichtdicke typisch 30 - 80µm, vorzugsweise 42 - 60µm) und einer damit auf einer Seite verbundenen gereckten ersten Kunststoffschicht 3 (Schichtdicke typisch 15 - 30µm), insbesondere eine Schicht aus gerecktem Polypropylen (oPP), einem gereckten Polyamid (oPA) oder einem gereckten Polyester, wie ein Polyethylenterephthalat (oPET oder oPETG). Die Kunststoffschicht 3 ist vorzugsweise bidirektional gereckt, kann aber auch nur unidirektional gereckt sein. Die Kaschierung erfolgt mittels einer ersten Kleberschicht 4, typischerweise mit einer Schichtdicke von 2 - 8µm oder einem Flächengewicht von 2 - 8 g/m² (trocken). Mit der anderen, gegenüberliegenden Seite der Trägerschicht 2 wird mit einer zweiten Kleberschicht 6 eine zweite Kunststoffschicht 7 als Siegelschicht verbunden. Die zweite Kunststoffschicht 7 ist vorzugsweise aus Polyvinylchlorid (PVC), Polypropylen (PP), Polyethylen (PE), oder Polyester (z.B. Polyethylenterephthalat (PET)), mit einer Schichtdicke von 15 - 150µm, vorzugsweise 25 - 60µm. Die Schichtdicke der zweiten Kleberschicht 6 liegt wieder im Bereich von 2 - 8µm oder einem Flächengewicht von 2 - 8 g/m² (trocken).

Als Kleber für die erste Kleberschicht 4 und/oder für die zweite Kleberschicht 6 kommen erfindungsgemäß ein Polyurethan Klebersystem, ein acrylatbasierter Kleber oder ein polyesterbasierter Kleber, auch als 2-Komponentenklebersystem, zur Anwendung, wobei auch Mischungen solcher Kleber denkbar sind. Es können für die beiden Kleberschichten 4, 6 natürlich auch verschiedene Kleber eingesetzt werden. Ein verwendeter Kleber könnte bei Bedarf vor dem Auftragen auch eingefärbt werden. Die erzielbare Haftung zwischen einer Aluminiumschicht der Trägerschicht 2 und einer gereckten Kunststoffschicht 3 mit einem oben genannten Kleber wäre aber aus den eingangs genannten Gründen nicht ausreichend für die Anforderungen in einem kaltverformbaren Verpackungslaminat 1, insbesondere nicht für eine durch Kaltumformung hergestellte Blisterverpackungsschale, beispielsweise zur Aufnahme eines Medikaments (Fig.2). Daher wird die der gereckten Kunststoffschicht 3 zugewandte Oberfläche der Aluminium Trägerschicht 2 vor dem Kaschieren silikatisiert oder titanisiert.

Die Silikatisierung oder Titanisierung ist bekanntermaßen eine Oberflächenbehandlung in Form einer Flammbehandlung, bei der dem Brenngas-Luftgemisch für die Erzeugung der Flamme eine Siliziumverbindung, wie ein Silan, oder eine Titanverbindung, als Titan enthaltende chemische Verbindung, zugemischt wird. Die Siliziumverbindung oder Titanverbindung erzeugt dabei eine dünne (wenige Nanometer), in der Regel für das freie Auge unsichtbare modifizierte Oberflächenschicht 5, wie z.B. eine SiOx oder TiOx Schicht, auf der Trägerschicht 2, die die Oberflächenspannung und damit auch die Hafteigenschaften der Aluminiumoberfläche erhöht. Die Silikatisierung oder Titanisierung ist z.B. aus der US 2005/0019580 A1 bekannt.

Durch die Silikatisierung oder Titanisierung werden die Hafteigenschaften der Aluminiumoberfläche der Trägerschicht 2 so weit verbessert, dass mit den oben genannten Klebern und vor allem ohne zusätzlichen Haftvermittler eine ausreichende Haftung zwischen der Trägerschicht 2 aus Aluminium und der gereckten Kunststoffschicht 3 erreicht wird, insbesondere wird die Verankerung des Klebers auf der Trägerschicht 2 verbessert. Die Verbundhaftung ist dabei ausreichend, sodass es an einer Blisterverpackungsschale 11 zu keinen Delaminationen im Bereich der Radien R der Kavitäten 12 kommt. In bisher verwendeten kaltverformbaren Verpackungslaminaten mit Haftvermittler und Kleber werden typischerweise Verbundhaftungen im Bereich von 9N/15mm erreicht. Ohne Haftvermittler wäre die Verbundhaftung im Bereich von 5N/15mm. Mit der erfindungsgemäßen Silikatisierung oder Titanisierung werden auch ohne Haftvermittler ebenfalls Verbundhaftungen im Bereich von 9N/15mm, oder sogar darüber, erreicht.

Die Verbundhaftung kann mit einem Schälversuch gemessen werden. Bei einem Schälversuch wird ein Teststreifen des Verpackungslaminats 1 an freien Enden der Trägerschicht 2 (eventuell mit der zweiten Kunststoffschicht 7) und der gereckten Kunststoffschicht 3 auseinandergezogen. Die freien Enden werden dabei in einer Zugmaschine eingespannt und auseinandergezogen und dabei die Kraft gemessen, beispielsweise bei einem Abzugwinkel von 90°. Bei einer Breite des Teststreifens von 15mm erhält man die Angabe der Verbundhaftung mit xN/15mm. Die Angabe der Verbundhaftung ist hierbei der nahezu konstante Schälwert (Peelwert) und nicht der maximale Anreißwert, der am Beginn des Schälversuches als Kraftspitze auftritt. In der Regel werden zur Ermittlung der Verbundhaftung auch einen Anzahl von Schälversuchen durchgeführt und die gesuchte Verbundhaftung als Mittelwert aus den einzelnen Messungen ermittelt.

Obwohl nicht unbedingt erforderlich, könnte auch die der zweiten Kunststoffschicht 7 zugewandte Oberfläche der Aluminium Trägerschicht 2 silikatisiert oder titanisiert werden. Ebenso könnte, alternativ oder zusätzlich, zwischen der Aluminium Trägerschicht 2 und der zweiten Kleberschicht 6, also an der Innenseite des Verpackungslaminats 1, ein Haftvermittler vorgesehen werden. Das kann beispielsweise dann vorgesehen werden, wenn ein aggressives Füllgut verpackt werden soll, das den Kleber an der Innenseite belastet und damit die Verbundhaftung an der Innenseite herabsetzen kann.

Weder die Silikatisierung, noch die Titanisierung erzeugt Stoffe oder Stoffkonzentrationen, die in einem kaltverformbaren Verpackungslaminat 1, insbesondere in einer Anwendung für die Verpackung von Lebensmitteln oder Medikamenten in einer Blisterverpackung, bedenklich oder durch gesetzliche Vorschriften verboten wären. Ebenso sind die genannten Kleber in solchen Verpackungslaminaten 1 unbedenklich und insbesondere sind hierfür Bisphenol-A freie Kleber verfügbar.

Die gereckte erste Kunststoffschicht 3 und/oder die zweite Kunststoffschicht 7 kann zusätzlich auf der der zugeordneten Kleberschicht 4, 6 zugewandten Oberfläche in bekannter Weise corona- oder flammvorbehandelt oder auch silikatisiert oder titanisiert werden, was die Verbundhaftung im Verpackungslaminat 1 auch kunststoffseitig erhöht. Ebenso könnte die gereckte Kunststoffschicht 3 und/oder die zweite Kunststoffschicht 7 bei Bedarf eingefärbt werden.

Die gereckte Kunststoffschicht 3 könnte dabei auch selbst mehrschichtig aufgebaut sein, z.B. in Form einer koextrudierten mehrschichtigen Kunststofffolie, die nach dem Extrudieren oder auch während der Extrusion gereckt wird. Ebenso kann natürlich auch die zweite Kunststoffschicht 7 mehrschichtig aufgebaut sein. Eine mehrschichtige Kunststofffolie kann dabei auch aus verschiedenen Materialen aufgebaut sein.

Auf der der Trägerschicht 2 abgewandten Oberfläche der gereckten ersten Kunststoffschicht 3 kann auch ein Druck aufgetragen sein, wobei die entstehende Druckschicht 8 auch durch einen Schutzlacküberzug oder durch eine aufkaschierte oder aufextrudierte Schutzschicht aus Kunststoff, wie Polyester oder Polypropylen, geschützt sein kann.

Um die Haftung zwischen den Druckfarben und/oder einer möglichen Schutzschicht und der gereckten Kunststoffschicht 3 zu verbessern kann auch vorgesehen sein, die dem Druck zugewandte Oberfläche der gereckten Kunststoffschicht 3 vor dem Bedrucken durch eine Silikatisierung oder Titanisierung oder durch eine Corona- oder Flammbehandlung vorzubehandeln, um auch dort die Hafteigenschaften zu verbessern.

Das kaltverformbare Verpackungslaminat 1 wird beispielsweise zu einer Blisterverpackungsschale 11 einer Blisterverpackung 10, wie in Fig.2 dargestellt, kaltverformt, beispielsweise durch Tiefziehen oder Streckziehen. An der Blisterverpackungsschale 11 sind eine Anzahl von Kavitäten 12 zur Aufnahme eines Füllgutes oder Produktes, wie beispielsweise ein Medikament oder ein medizinisches Produkt, ausgebildet. Die gereckte Kunststoffschicht 3 bildet die Außenseite 14 der Blisterverpackungsschale 11 bzw. der Blisterverpackung 10 aus. Die gereckte Kunststoffschicht 3 ist damit dem Inneren der Kavität 12 abgewandt angeordnet. Falls die gereckte Kunststoffschicht 3 bedruckt ist, dann ist der Druck vorzugsweise außen liegend. Die zweite Kunststoffschicht 7 des Verpackungslaminats 1 ist dem Inneren der Blisterverpackung 10 zugewandt und kann als Siegelschicht ausgeführt sein. Die Anzahl der Kavitäten 12 der Blisterverpackungsschale 11 werden in der Blisterverpackung 10 durch eine Deckelfolie 13, üblicherweise ebenfalls ein mehrschichtiges Verpackungslaminat zumindest mit einer Siegelschicht, einer Barriereschicht und einer Substratschicht, verschlossen, beispielsweise durch Heißsiegeln der Deckelfolie 13 auf die Oberfläche der Blisterverpackungsschale 11.

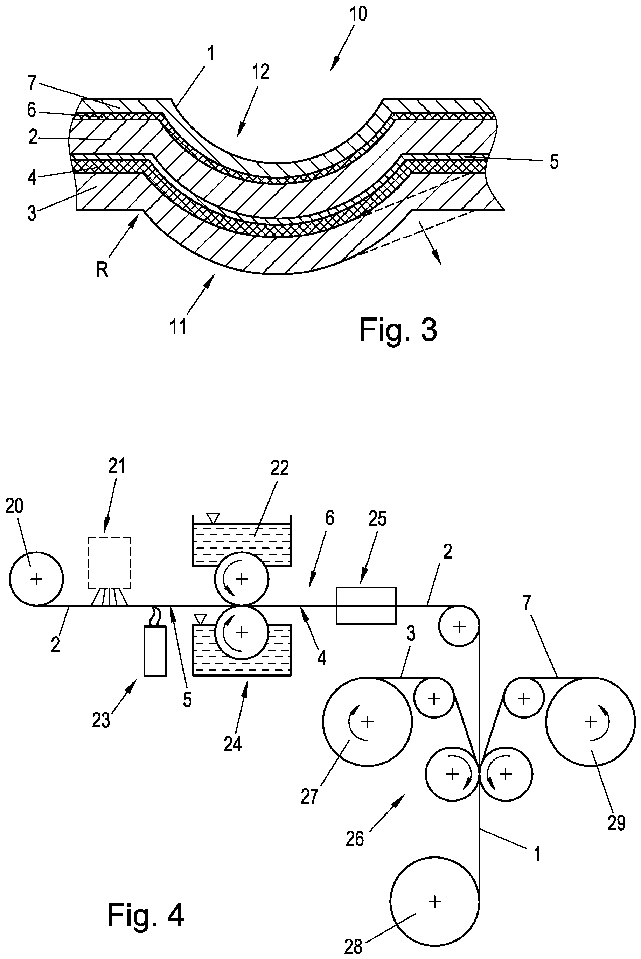

Durch die Kaltumformung zur Ausbildung der Anzahl der Kavitäten 12 entstehen an den Übergängen der Kavitäten 12 kleine Radien R, wie in Fig.3 dargestellt. Durch das Rückschrumpfverhalten und den Entspannungsprozess der gereckten Kunststoffschicht 3 kann es bei unzureichender Verbundhaftung aufgrund der auftretenden Scher- und Zugbeanspruchung an der Grenzschicht zwischen Aluminium Trägerschicht 2 und gereckter Kunststoffschicht 3 zu einer Delamination in diesem Bereich kommen, wie in Fig.3 durch den Pfeil und die strichlierten Linien angedeutet. Dieses Problem wird noch dadurch verschärft, weil immer kleinere Blisterverpackungen 10 gewünscht werden, was an der Kavität 12 zu steileren Winkeln und schärferen Radien R in diesem Übergangsbereich führt. Die Delamination in diesem Bereich kann durch die erfindungsgemäße Silikatisierung oder Titanisierung weitestgehend verhindert werden.

In vielen Fällen werden hergestellte Verpackungen Tests, wie beispielsweise einem Test zur Lagerungsstabilität, unterzogen. Bei Blisterverpackungen für Medikamente wird oftmals eine Lagerstabilität von 5 Jahren bei 15 bis 35°C und 30 bis 70% relativer Luftfeuchtigkeit gefordert. Um das zu überprüfen werden typischerweise beschleunigte Prüfungen eingesetzt, beispielsweise eine Prüfung der Lagerstabilität über 6 Monate bei 40°C und 75% relativer Luftfeuchtigkeit. Bei einer solchen Prüfung einer Blisterverpackung 10 oder Blisterverpackungsschale 11 mit einem erfindungsgemäßen Verpackungslaminat 1 konnte festgestellt werden, dass es praktisch zu keinen Ausfällen durch Delamination kommt. Darunter wird verstanden, dass eine zumindest vergleichbare, in der Regel aber verbesserte, Ausfallswahrscheinlichkeit durch Delamination wie bei bisher üblichen Verpackungslaminaten mit Haftvermittler festgestellt werden kann.

Mit Fig.4 ist ein beispielhafter Herstellprozess für ein erfindungsgemäßes kaschiertes kaltverformbares Verpackungslaminat 1, beispielsweise nach Fig.1, dargestellt. Eine Aluminiumfolie (Trägerschicht 2) wird von einer Rolle 20 abgewickelt und an einer Seite in einem Oberflächenbehandlungswerk 23 silikatisiert oder titanisiert, um die modifizierte Oberflächenschicht 5 auf der Aluminium Trägerschicht 2 auszubilden. Die andere Seite der Aluminium Trägerschicht 2 kann in einem weiteren Oberflächenbehandlungswerk 21 optional corona- oder flammbehandelt oder ebenfalls silikatisiert oder titanisiert werden. Auf die modifizierte Oberflächenschicht 5 wird in einem Kleberauftragswerk 24 der Kleber für die erste Kleberschicht 4 aufgetragen. Ebenso kann in einem weiteren Kleberauftragswerk 22 der Kleber für die zweite Kleberschicht 6 aufgetragen werden. Die aufgetragenen Kleber werden in einem Trockenkanal 25 getrocknet, beispielsweise durch Temperatur oder Strahlung (z.B. UV). Selbstverständlich kann auch zuerst der erste Kleber aufgetragen und getrocknet werden und erst danach der zweite Kleber aufgetragen und getrocknet werden, oder umgekehrt. Da Aluminium an beiden Seiten mit einer Kunststofffolie verbunden wird, kommt an sich nur die Trockenkaschierung in Frage, da sich das Lösemittel des Kleber beim Nasskaschieren nicht oder nicht ausreichend schnell verflüchtigen könnte, was zu Bläschenbildung führen könnte. Die derart behandelte Aluminium Trägerschicht 2 wird dann einem Kaschierwerk 26 zugeführt. Dem Kaschierwerk 26 wird gleichzeitig auch die gereckte Kunststoffschicht 3 von einer Rolle 27 und die zweite Kunststoffschicht 7 von einer Rolle 29 zugeführt. Die Kaschierung erfolgt im Kaschierwerk 26 zwischen einem Rollenpaar, das die Trägerschicht 2 und die beiden Kunststoffschichten 3, 7 zusammendrückt. Selbstverständlich können auch zwei Kaschierwerke hintereinander angeordnet sein, in denen die gereckte Kunststoffschicht 3 und die zweite Kunststoffschicht 7 nacheinander (in beliebiger Reihenfolge) kaschiert werden. Das fertige kaltverformbare Verpackungslaminat 1 kann dann auf einer Rolle 28 aufgewickelt und von der Rolle 28 weiterverarbeitet werden.

Selbstverständlich kann an geeigneter Stelle auch noch ein Druckwerk vorgesehen sein, um die Druckschicht 8 auf die gereckte Kunststoffschicht 3 aufzutragen. Auch ein Lackierwerk zum Auftragen einer Schutzlackschicht auf die Druckschicht 8 ist möglich. Ebenso könnte die gereckte Kunststoffschicht 3 bereits bedruckt, und gegebenenfalls lackiert, auf der Rolle 27 aufgewickelt sein.

Das kaltverformbare Verpackungslaminat 1 kann aber zumindest teilweise auch durch ein Extrusionsverfahren hergestellt werden. Beispielsweise könnte die erste Kleberschicht 3 auf die modifizierte Oberfläche 5 der Aluminium Trägerschicht 2 aufextrudiert werden. Gleiches gilt natürlich für die zweite Kleberschicht 6. Auf der anderen Seite der Aluminium Trägerschicht 2 könnte die zweite Kleberschicht 6 und die zweite Kunststofffolie 7 in einem Coextrusionsprozess auch gleichzeitig auf die Aluminium Trägerschicht 2 aufextrudiert werden. Hierbei können Kaschierverfahren und Extrusionskaschierverfahren in der Herstellung des Verpackungslaminats 1 auch beliebig kombiniert werden.

Im Falle einer Extrusionskaschierung kommt bevorzugt ein Kleber auf Polyolefinbasis, bevorzugt eine modifzierte Polypropylenverbindung, z.B. ein Maleinsäureanhydrid-gepropftes Polypropylen, zur Anwendung.

Beim Extrudieren könnten auch zusätzliche Funktionalitäten realisiert werden, wie z.B. eine Einfärbung einer Schicht aus optischen Gründen, Zugabe von feuchte- oder sauerstoffabsorbierenden Additiven, Zugabe von antimikrobiell wirkenden Additiven, usw.

Aus dem Verpackungslaminat 1 kann durch Kaltumformen, beispielsweise durch Streckziehen, eine Blisterverpackungsschale 11 hergestellt werden. Das Verpackungslaminat 1 kann dazu von der Rolle 28 einem Kaltumformprozess zugeführt werden. Die hergestellten Blisterverpackungsschalen 11 können dann in einer Verpackungsmaschine mit einem Füllgut, beispielsweise einem Medikament, gefüllt werden und anschließend mit einer Deckelfolie 13 zur Ausbildung einer Blisterverpackung 10 verschlossen werden, beispielsweise durch Heißsiegeln.

## Patentansprüche

1. Kaltverformbares Verpackungslaminat, welches durch Kaltverformung zu einer Blisterverpackungsschale verformbar ist, mit einer Trägerschicht (2) aus Aluminium, die an einer erste Seite über eine erste Kleberschicht (4) mit einer gereckten Kunststoffschicht (3) verbunden ist und an der gegenüberliegenden zweiten Seite über eine zweite Kleberschicht (6) mit einer zweiten Kunststoffschicht (7) verbunden ist, **dadurch gekennzeichnet, dass** die der ersten Kleberschicht (4) zugewandte Oberfläche der Trägerschicht (2) eine durch Silikatisierung oder Titanisierung hergestellte modifizierte Oberflächenschicht (5) aufweist, auf die die erste Kleberschicht (4) aufgetragen ist.

2. Kaltverformbares Verpackungslaminat nach Anspruch 1, **dadurch gekennzeichnet, dass** die gereckte Kunststoffschicht (3) eine Schicht aus gerecktem Polypropylen, gerecktem Polyamid oder gerecktem Polyester hergestellt ist.

3. Kaltverformbares Verpackungslaminat nach Anspruch 1 oder 2, **dadurch gekennzeichnet, dass** die zweite Kunststoffschicht (7) aus Polyvinylchlorid, Polypropylen, Polyethylen oder Polyester hergestellt ist.

4. Kaltverformbares Verpackungslaminat nach einem der Ansprüche 1 bis 3, **dadurch gekennzeichnet, dass** die gereckte Kunststoffschicht (3) an der Außenseite bedruckt ist.

5. Kaltverformbares Verpackungslaminat nach einem der Ansprüche 1 bis 4, **dadurch gekennzeichnet, dass** zwischen der zweiten Kleberschicht (6) und der Trägerschicht (2) ein Haftvermittler vorgesehen ist.

6. Kaltverformbares Verpackungslaminat nach einem der Ansprüche 1 bis 5, **dadurch gekennzeichnet, dass** die der zweiten Kleberschicht (6) zugewandte Oberfläche der Trägerschicht (2) eine durch Silikatisierung oder Titanisierung hergestellte modifizierte Oberflächenschicht aufweist, auf die die zweite Kleberschicht (6) aufgetragen ist.

7. Blisterverpackungsschale, die durch Kaltumformen eines Verpackungslaminats nach einem der Ansprüche 1 bis 6 hergestellt ist, wobei in der Blisterverpackungsschale (11) zumindest eine Kavität (12) ausgebildet ist und die gereckte Kunststoffschicht (3) dem Inneren der Kavität (12) abgewandt angeordnet ist.

8. Verfahren zur Herstellung eines durch Kaltverformung zu einer Blisterverpackungsschale verformbaren Verpackungslaminats (1), wobei eine erste Seite einer Trägerschicht (2) aus Aluminium mit einer erster Kleberschicht (4) mit einer gereckten Kunststoffschicht (3) verbunden wird und eine gegenüberliegenden zweiten Seite der Trägerschicht (2) mit einer zweiten Kleberschicht (6) mit einer zweiten Kunststoffschicht (7) verbunden wird, **dadurch gekennzeichnet, dass** die der ersten Kleberschicht (4) zugewandte Oberfläche der Trägerschicht (2) vor dem Auftragen der ersten Kleberschicht einer Silikatisierung oder Titanisierung unterworfen wird.

## Claims

1. Cold-formable packaging laminate which can be cold-formed into a blister packaging tray, comprising a carrier layer (2) made of aluminum, which layer is bonded on a first side to an oriented plastics layer (3) via a first adhesive layer (4), and on an opposite second side to a second plastics layer (7) via a second adhesive layer (6), **characterized in that** the surface of the carrier layer (2) facing the first adhesive layer (4) has a modified surface layer (5) which is produced by silication or titanization and on which the first adhesive layer (4) is applied.

2. Cold-formable packaging laminate according to claim 1, **characterized in that** the oriented plastics layer (3) is a layer made of oriented polypropylene, oriented polyamide or oriented polyester.

3. Cold-formable packaging laminate according to either claim 1 or 2, **characterized in that** the second plastics layer (7) is made of polyvinyl chloride, polypropylene, polyethylene or polyester.

4. Cold-formable packaging laminate according to any of claims 1 to 3, **characterized in that** the oriented plastics layer (3) is printed on the outside.

5. Cold-formable packaging laminate according to any of claims 1 to 4, **characterized in that** an adhesion promoter is provided between the second adhesive layer (6) and the carrier layer (2).

6. Cold-formable packaging laminate according to any of claims 1 to 5, **characterized in that** the surface of the carrier layer (2) facing the second adhesive layer (6) has a modified surface layer produced by silication or titanization, to which surface layer the second adhesive layer (6) is applied.

7. Blister packaging tray which is produced by cold forming a packaging laminate according to any of claims 1 to 6, wherein at least one cavity (12) is formed in the blister packaging tray (11) and the oriented plastics layer (3) is arranged facing away from the interior of the cavity (12).

8. Method for producing a packaging laminate (1) which can be cold-formed into a blister packaging tray, a first side of a carrier layer (2) made of aluminum being bonded to an oriented plastics layer (3) by means of a first adhesive layer (4), and an opposite second side of the carrier layer (2) being bonded to a second plastics layer (7) by means of a second adhesive layer (6), **characterized in that** the surface of the carrier layer (2) facing the first adhesive layer (4) is subjected to silication or titanization before the first adhesive layer is applied.

## Revendications

1. Stratifié d'emballage déformable à froid, lequel peut être déformé en une coque d'emballage blister par déformation à froid, comportant une couche de support (2) en aluminium, laquelle est reliée à une couche en matière plastique (3) étirée sur une première face par l'intermédiaire d'une première couche d'adhésif (4) et laquelle est reliée à une seconde couche en matière plastique (7) sur une seconde face opposée par l'intermédiaire d'une seconde couche d'adhésif (6), **caractérisé en ce que** la surface de la couche de support (2) faisant face à la première couche d'adhésif (4) comporte une couche de surface (5) modifiée fabriquée par silicatisation ou titanisation, sur laquelle la première couche d'adhésif (4) est appliquée.

2. Stratifié d'emballage déformable à froid selon la revendication 1, **caractérisé en ce que** la couche en matière plastique (3) étirée est une couche en polypropylène étiré, en polyamide étiré ou en polyester étiré.

3. Stratifié d'emballage déformable à froid selon la revendication 1 ou 2, **caractérisé en ce que** la seconde couche en matière plastique (7) est en chlorure de polyvinyle, en polypropylène, en polyéthylène ou en polyester.

4. Stratifié d'emballage déformable à froid selon l'une quelconque des revendications 1 à 3, **caractérisé en ce que** la couche en matière plastique (3) étirée est imprimée sur la face extérieure.

5. Stratifié d'emballage déformable à froid selon l'une quelconque des revendications 1 à 4, **caractérisé en ce qu'**un promoteur d'adhérence est fourni entre la seconde couche d'adhésif (6) et la couche de support (2).

6. Stratifié d'emballage déformable à froid selon l'une quelconque des revendications 1 à 5, **caractérisé en ce que** la surface de la couche de support (2) faisant face à la seconde couche d'adhésif (6) comporte une couche de surface modifiée fabriquée par silicatisation ou titanisation, sur laquelle la seconde couche d'adhésif (6) est appliquée.

7. Coque d'emballage blister, laquelle est fabriquée par déformation à froid d'un stratifié d'emballage selon l'une quelconque des revendications 1 à 6, dans laquelle au moins une cavité (12) est formée dans la coque d'emballage blister (11) et la couche en matière plastique (3) étirée est disposée à l'opposé de l'intérieur de la cavité (12).

8. Procédé de fabrication d'un stratifié d'emballage (1) déformable à froid en une coque d'emballage blister, dans lequel une première face d'une couche de support (2) en aluminium est reliée à une couche en matière plastique (3) étirée au moyen d'une première couche d'adhésif (4) et une seconde face opposée de la couche de support (2) est reliée à une seconde couche en matière plastique (7) au moyen d'une seconde couche d'adhésif (6), **caractérisé en ce que** la surface de la couche de support (2) faisant face à la première couche d'adhésif (4) est soumise à une silicatisation ou à une titanisation avant l'application de la première couche d'adhésif.
